# EUROPÄISCHE PATENTSCHRIFT

(11) **EP 2 235 598 B1**
(45) Veröffentlichungstag und Bekanntmachung des Hinweises auf die Patenterteilung: **15.05.2013**
(21) Anmeldenummer: 08707364.9
(22) Anmeldetag: 24.01.2008
(51) Int. Cl.: G05B 19/042, H04L 9/32

(54) **FELDGERÄT UND VERFAHREN ZU DESSEN BETRIEB**
FIELD DEVICE AND METHOD OF OPERATION THEREOF
APPAREIL DE TERRAIN ET SON PROCÉDÉ DE FONCTIONNEMENT

(43) Veröffentlichungstag der Anmeldung: 06.10.2010
(73) Patentinhaber: Siemens Aktiengesellschaft, 80333 München (DE)
(72) Erfinder: JURISCH, Andreas, 16727 Schwante (DE)
(86) Internationale Anmeldenummer: PCT/EP2008/000661
(87) Internationale Veröffentlichungsnummer: WO 2009/092399

(56) Entgegenhaltungen:
- WO-A-2007/036178
- DE-A1- 10 128 829

## Beschreibung

Die Erfindung bezieht sich auf ein Feldgerät, insbesondere Schutzgerät, zum Schützen, Steuern oder Überwachen einer elektrischen Schalt- oder Energieversorgungsanlage mit den Merkmalen gemäß dem Oberbegriff des Anspruchs 1.

Ein derartiges Feldgerät ist in der internationalen Patentanmeldung WO 2007/036178 beschrieben. Dieses Feldgerät ist mit einer Zugriffskontrolleinrichtung, die einen Zugriff auf das Feldgerät kontrolliert, ausgestattet. Die Zugriffskontrolleinrichtung umfasst einen Speicher mit darin abgespeicherten Zugriffsrechten, Rollen und Nutzern, wobei jedes Zugriffsrecht jeweils den Zugriff auf mindestens einen Gerätewert, einen Geräteparameter oder eine Gerätefunktion definiert, jeder Rolle jeweils ein oder mehrere Zugriffsrechte zugeordnet sind, und jedem Nutzer jeweils ein oder mehrere Rollen zugeordnet sind. Die Zugriffskontrolleinrichtung umfasst außerdem eine Steuereinrichtung, die geeignet ist, einen Zugriff auf einen Gerätewert, einen Geräteparameter oder eine Gerätefunktion durch einen Nutzer zu unterbinden, wenn dem jeweiligen Nutzer keine Rolle mit dem für den jeweiligen Zugriff erforderlichen Zugriffsrecht zugeordnet ist.

Der Erfindung liegt die Aufgabe zugrunde, ein Feldgerät anzugeben, das einen noch besseren Schutz des Feldgeräts vor einem unerlaubten Gerätezugriff bietet und insbesondere eine unerlaubte Gerätemanipulation verhindert.

Diese Aufgabe wird ausgehend von einem Feldgerät der eingangs angegebenen Art erfindungsgemäß durch die kennzeichnenden Merkmale des Anspruchs 1 gelöst. Vorteilhafte Ausgestaltungen der Erfindung sind in Unteransprüchen angegeben.

Danach ist erfindungsgemäß vorgesehen, dass die Steuereinrichtung ein Prüfmodul aufweist, das einen Zugriff durch einen Nutzer ausschließlich dann zulässt, wenn das für den jeweiligen Zugriff erforderliche und in dem Speicher abgespeicherte Zugriffsrecht mit einer gültigen elektronischen Unterschrift versehen ist.

Ein wesentlicher Vorteil des erfindungsgemäßen Feldgeräts ist darin zu sehen, dass bei diesem ausschließlich Zugriffe möglich sind, die sich auf ein authentisches, nicht verfälschtes Zugriffsrecht stützen. Verfälschte Zugriffsrechte werden erkannt und gesperrt, so dass auch ein mittelbares bzw. mehrstufiges Außerkraftsetzen von Zugriffbeschränkungen keinen Erfolg bringen kann. Dies soll anhand des folgenden Beispiels näher verdeutlicht werden: Will ein Nutzer auf ein im Stand der Technik vorbekanntes Feldgerät zugreifen, obwohl seine Zugriffsrechte hierzu nicht ausreichen, so ist es denkbar, dass der Nutzer im Rahmen einer Gerätemanipulation zunächst eines oder mehrere der für ihn zugelassenen Zugriffsrechte manipuliert und erweitert, nämlich derart, dass die erweiterten Zugriffsrechte den gewünschten Zugriff erlauben; ein solcher unerlaubter Zugriff würde also in einer ersten Stufe über die Verfälschung und Erweiterung vorhandener freigeschalteter Zugriffsrechte und in einer zweiten Stufe über die Aktivierung der manipulierten freigeschalteten Zugriffsrechte erfolgen. An dieser Stelle setzt die Erfindung an, indem bei jedem Gerätezugriff überprüft wird, ob das jeweilige Zugriffsrecht authentisch und unverfälscht ist; nur wenn diese Prüfung positiv ausfällt, wird das angeforderte Nutzungsrecht aktiviert. Eine mehrstufige Gerätemanipulation, wie sie oben beschrieben ist, führt bei dem erfindungsgemäßen Feldgerät also zu keinem Erfolg.

Ein weiterer Vorteil des erfindungsgemäßen Feldgeräts besteht darin, dass eine Erweiterung der Funktionalität des Feldgerätes durch Parametrierung nur von autorisierten Personen erfolgen kann und für diese Erweiterungen ebenfalls wieder Zugriffsbeschränkungen definiert werden können.

Vorzugsweise ist die gültige elektronische Unterschrift einem autorisierten Zugriffsrechte-Administrator zugeordnet, so dass die gültige elektronische Unterschrift bestätigt, dass das jeweilige Zugriffsrecht von einem autorisierten Zugriffsrechte-Administrator freigegeben worden ist.

Elektronische Unterschriften werden beispielsweise dadurch erzeugt, dass der zu unterschreibende Inhalt als Datensequenz betrachtet wird und diese Sequenz als Eingangsinformation für einen Hash-Algorithmus benutzt wird. Als Ausgangsinformation erhält man einen Prüfcode. Dieser Prüfcode wird anschließend beispielsweise mittels eines asymmetrischen Verschlüsselungsalgorithmus verschlüsselt. Der verschlüsselte Hash-Code ist die elektronische Umterschrift für den als Eingangsinformation des Hash-Algorithmus verwendeten Inhalt und wird an den Inhalt angehangen.

Für die Ver- und Entschlüsselung des Hash-Codes wird beispielsweise ein Schlüsselpaar, bestehend aus einem privaten und einem öffentlichen kryptographischen Schlüssel, benutzt. Der Aussteller der elektronischen Unterschrift speichert seinen für die Verschlüsselung verwendeten privaten kryptographischen Schlüssel beispielsweise in einem Zertifikat. Um die elektronische Unterschrift überprüfen zu können, benötigt der Überprüfende den öffentlichen Schlüssel. Mit diesem öffentlichen Schlüssel kann der Überprüfende den Hash-Code entschlüsseln und mittels des Hash-Algorithmus den Hash-Code über die zu überprüfende Datensequenz ein zweites Mal bilden. Stimmen der entschlüsselte und der selbst gebildete Hash-Code überein, dann ist der Inhalt unverändert. Die Entschlüsselung des Hash-Codes kann nur erfolgreich sein, wenn die zum Verund Entschlüsseln verwendeten Schlüssel zum gleichen Schlüsselpaar gehören. Der zum Überprüfen der elektronischen Unterschrift verwendete öffentliche Schlüssel wird im folgenden als Prüfschlüssel bezeichnet. Weitere Informationen zu derartigen Verfahren sind u. a. unter
http://de.wikipedia.org/wiki/Digitale_Signatur zu finden.

Mit Blick auf ein besonders hohes Maß an Manipulationssicherheit wird es als vorteilhaft angesehen, wenn in dem Feldgerät zumindest ein Prüfschlüssel in nicht überschreibbarer Form fest abgespeichert ist, mit dem sich die Gültigkeit der elektronischen Unterschrift feststellen lässt. Durch den vorgeschlagenen Schutz des Prüfschlüssels lässt sich vermeiden, dass im Rahmen einer mehrstufigen Geräte-Manipulation zunächst der Prüfschlüssel modifiziert wird, um nachfolgend verfälschte Zugriffsrechte aktivieren zu können.

Um Wartungs-, Parametrier- oder sonstige Servicearbeiten durch autorisierte Nutzer, wie beispielsweise Zugriffsrechte-Administratoren, zu vereinfachen, wird es als vorteilhaft angesehen, wenn der Speicher von außen, insbesondere über eine Datenleitung, mittelbar oder unmittelbar ansprechbar ist und dass von außen weitere Zugriffsrechte abspeicherbar sind.

Vorzugsweise wird die Steuereinrichtung ein weiteres Zugriffsrecht in dem Speicher nur dann abspeichern, wenn dieses eine gültige elektronische Unterschrift aufweist und insbesondere eine Prüfung der elektronischen Unterschrift bestätigt, dass dieses von einem zur Freigabe von Zugriffsrechten autorisierten Zugriffsrechte-Administrator stammt. Beispielsweise überprüft das Prüfmodul die Gültigkeit einer elektronischen Unterschrift eines weiteren Zugriffsrechts vor dessen Abspeicherung mit einem oder mehreren in dem Feldgerät fest abgespeicherten und nicht überschreibbaren Prüfschlüsseln.

Gemäß einer besonders bevorzugten Ausgestaltung des Feldgeräts ist vorgesehen, dass in dem Speicher die Zugriffsrechte, Rollen und Nutzer in einem ersten Datensatz, der jedem Nutzer jeweils zumindest eine Rolle zuordnet, und in einem zweiten Datensatz, der jedem Zugriffsrecht jeweils zumindest eine Rolle zuordnet, abgespeichert sind.

Vorzugsweise weist das Prüfmodul zumindest ein erstes Hilfsmodul, ein zweites Hilfsmodul und ein mit dem ersten Hilfsmodul und dem zweiten Hilfsmodul verbundenes Vergleichsmodul auf, wobei das erste Hilfsmodul geeignet ist, im Falle eines Zugriffs durch einen Nutzer aus dem ersten Datensatz die Rolle bzw. die Rollen des jeweiligen Nutzers auszulesen und diese an das Vergleichsmodul zu übertragen, wobei das zweite Hilfsmodul geeignet ist, aus dem zweiten Datensatz diejenigen Rollen auszulesen, die das für den jeweiligen Zugriff erforderliche Zugriffsrecht besitzen, und die ausgelesenen Rollen an das Vergleichsmodul zu übertragen, und wobei das Vergleichsmodul geeignet ist, die von dem ersten Hilfsmodul ausgelesenen Rollen mit denen des zweiten Hilfsmoduls zu vergleichen und einen Zugriff des Nutzers zu blockieren, falls keine einzige Rollenüberseinstimmung festgestellt wird.

Die Erfindung bezieht sich außerdem auf ein Verfahren zum Betreiben eines Feldgeräts, insbesondere Schutzgeräts, zum Schützen, Steuern oder Überwachen einer elektrischen Schalt-oder Energieversorgungsanlage, wobei ein Zugriff auf das Feldgerät mittels in einem Speicher abgespeicherter Zugriffsrechte, Rollen und Nutzern kontrolliert wird, wobei jedes Zugriffsrecht jeweils den Zugriff auf mindestens einen Gerätewert, einen Geräteparameter oder eine Gerätefunktion definiert, jeder Rolle jeweils ein oder mehrere Zugriffsrechte zugeordnet sind, und jedem Nutzer jeweils ein oder mehrere Rollen zugeordnet sind, und ein Zugriff auf einen Gerätewert, einen Geräteparameter oder eine Gerätefunktion durch einen Nutzer unterbunden wird, wenn dem jeweiligen Nutzer keine Rolle mit dem für den jeweiligen Zugriff erforderlichen Zugriffsrecht zugeordnet ist.

Erfindungsgemäß ist bei einem solchen Verfahren vorgesehen, dass ein Zugriff durch einen Nutzer ausschließlich dann zugelassen wird, wenn das für den jeweiligen Zugriff erforderliche und in dem Speicher abgespeicherte Zugriffsrecht mit einer gültigen elektronischen Unterschrift versehen ist. Vorzugsweise bestätigt die gültige elektronische Unterschrift, dass das jeweilige Zugriffsrecht von einem autorisierten Zugriffsrechte-Administrator freigegeben worden ist.

Bezüglich der Vorteile des erfindungsgemäßen Verfahrens und bezüglich vorteilhafter Ausgestaltungen des Verfahrens sei auf die obigen Ausführungen im Zusammenhang mit dem erfindungsgemäßen Feldgerät verwiesen.

Die Erfindung wird nachfolgend anhand von Ausführungsbeispielen näher erläutert; dabei zeigen beispielhaft
- Figur 1: ein erstes Ausführungsbeispiel für ein erfindungsgemäßes Feldgerät,
- Figur 2: ein zweites Ausführungsbeispiel für ein erfindungsgemäßes Feldgerät, bei dem zwei separate Datensätze zur Definition der Zuordnung zwischen Nutzern und Rollen einerseits und Rollen und Zugriffsrechten andererseits definiert sind,
- Figur 3: beispielhaft die Zuordnung zwischen Nutzern, Rollen und Zugriffsrechten mit einer Baumstruktur,
- Figuren 4-5: ein Ausführungsbeispiel für eine Zuordnung zwischen Nutzern, Rollen und Zugriffsrechten mit einer Baumstruktur sowie einer zugeordneten Tabelle,
- Figur 6: ein Ausführungsbeispiel für ein Prüfmodul einer Steuereinrichtung für ein Feldgerät gemäß den Figuren 1 und 2 und
- Figur 7: ein drittes Ausführungsbeispiel für ein erfindungsgemäßes Feldgerät, bei dem Zugriffsrechte Rollen und Nutzer in einer anderen Form abgespeichert sind.

In den Figuren werden der Übersicht halber für identische oder vergleichbare Komponenten stets dieselben Bezugszeichen verwendet.

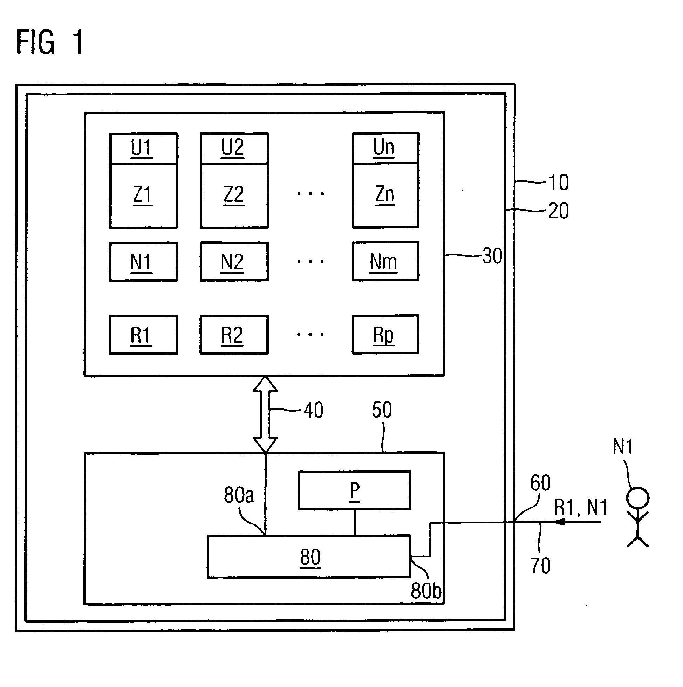

In der Figur 1 ist ein Ausführungsbeispiel für ein Feldgerät 10 dargestellt, das mit einer Zugriffskontrolleinrichtung 20 ausgestattet ist. Die übrigen Komponenten des Feldgeräts 10 sind der Übersicht halber in der Figur 1 nicht weiter dargestellt.

Die Zugriffskontrolleinrichtung 20 weist einen Speicher 30 sowie eine über eine Busleitung 40 mit dem Speicher 30 verbundene Steuereinrichtung 50 auf. Die Steuereinrichtung 50 ist außerdem mit einem Anschluss 60 des Feldgerätes 10 verbunden. An den Anschluss 60 kann beispielsweise eine externe Datenleitung 70 angeschlossen sein, über die ein Nutzer, beispielsweise der Nutzer N1, mit dem Feldgerät 10 in Verbindung treten kann.

Der Figur 1 lässt sich entnehmen, dass in dem Speicher 30 Zugriffsrechte Z1, Z2, ... Zn abgespeichert sind. Jedes Zugriffsrecht ist jeweils mit einer gültigen elektronischen Unterschrift versehen; die entsprechenden Unterschriften sind in der Figur 1 mit dem Bezugszeichen U1, U2, ... Un gekennzeichnet. Bei den elektronischen Unterschriften U1 bis Un kann es sich beispielsweise um mit dem RSA-Verfahren erzeugte digitale Signaturen handeln.

In dem Speicher 30 sind darüber hinaus Nutzer N1 bis Nm sowie Rollen R1 bis Rp abgespeichert. Jeder Rolle R1 bis Rp sind jeweils ein oder mehrere Zugriffsrechte Z1 bis Zn zugeordnet, und jedem Nutzer N1 bis Nm sind jeweils ein oder mehrere Rollen R1 bis Rp zugeordnet. Die Zugriffsrechte Z1 bis Zn definieren jeweils den Zugriff auf mindestens einen Gerätewert, einen Geräteparameter oder eine Gerätefunktion des Feldgerätes 10.

Die Steuereinrichtung 50 ist mit einem Prüfmodul 80 ausgestattet, das mit der Busleitung 40 sowie mit dem Anschluss 60 des Feldgeräts 10 in Verbindung steht. Außerdem weist das Prüfmodul 80 einen Zugriff auf einen oder mehrere Prüfschlüssel P auf, die entweder in der Steuereinrichtung 50 oder an einer anderen Stelle - zum Beispiel dem Speicher 30 - des Feldgerätes 10 abgespeichert sein können. Bei dem Ausführungsbeispiel gemäß der Figur 1 ist beispielhaft ein einziger Prüfschlüssel P in der Steuereinrichtung 50 abgespeichert.

Der Prüfschlüssel P ist vorzugsweise in einer nicht überschreibbaren Form fest abgespeichert, um eine Manipulation des Prüfschlüssels P im Rahmen eines Zugriffs von außen zu verhindern. Der Prüfschlüssel P kann beispielsweise in Form eines X.509-Zertifikats abgespeichert sein.

Das Feldgerät 10 lässt sich beispielsweise wie folgt betreiben:
Will der Nutzer N1 in der Rolle R1 auf das Feldgerät 10 zugreifen, so wird er sich über den Anschluss 60 bei der Steuereinrichtung 50 anmelden. Die Steuereinrichtung 50 wird bei einer solchen Anmeldung zunächst prüfen, ob der Nutzer N1 zugriffsberechtigt ist. Eine solche Zugriffsberechtigungsprüfung kann beispielsweise passwort- und zertifikatsgestützt erfolgen, wie dies beispielsweise in der eingangs erwähnten internationalen Patentanmeldung WO 2007/036178 erläutert ist. Stellt die Steuereinrichtung 50 bei dieser Zugriffsprüfung fest, dass der Nutzer N1 berechtigt ist, auf das Feldgerät 10 zuzugreifen, so wird sie anschließend prüfen, ob dem Nutzer N1 in dem Speicher 30 die vom Nutzer N1 gewünschte Rolle R1 zugeordnet ist. Ist dies nicht der Fall, so wird die Steuereinrichtung 50 den Zugriff verweigern, andernfalls wird sie den Zugriff gewähren.
Will nun der Nutzer N1 in der Rolle R1 das Zugriffsrecht Z1 nutzen und übersendet er eine entsprechende Anforderung an das Feldgerät 10 über die Datenleitung 70, so wird die Steuereinrichtung 50 prüfen, ob der Rolle R1 des Nutzers N1 das Zugriffsrecht Z1 zugeordnet ist. Ist dies der Fall, so wird die Steuereinrichtung 50 jedoch unmittelbar noch keinen Zugriff erlauben, sondern zunächst prüfen, ob das in dem Speicher 30 abgespeicherte und vom Nutzer N1 angeforderte Zugriffsrecht Z1 tatsächlich mit einer gültigen elektronischen Unterschrift U1 versehen ist. Alternativ kann die Prüfung der elektronischen Unterschrift bereits beim Abspeichern des Zugriffsrechtes im Speicher 30 erfolgen.

Die Prüfung der Unterschrift U1 erfolgt mit dem in der Steuereinrichtung 50 in nicht überschreibbarer Form fest abgespeicherten Prüfschlüssel P, mit dem sich die Gültigkeit der Unterschrift U1 prüfen lässt. Mit dieser Unterschriftsprüfung lässt sich bestätigen, ob das in dem Speicher 30 abgespeicherte Zugriffsrecht Z1 tatsächlich von einem autorisierten Zugriffsrechts-Administrator freigegeben worden ist: Nur wenn dies der Fall ist und die Authentizität des Zugriffsrechts Z1 durch die Unterschriftsprüfung bestätigt wird, wird die Steuereinrichtung 50 die Ausführung des Zugriffsrechts Z1 erlauben.

Die Gültigkeits- bzw. Authentizitätsprüfung der Zugriffsrechte Z1 bis Zn dient dazu sicherzustellen, dass tatsächlich nur solche Zugriffsrechte ausgeübt bzw. aktiviert werden können, die tatsächlich von einem autorisierten Administrator erzeugt oder freigegeben worden sind. Durch diese Authentizitätsprüfung lässt sich beispielsweise verhindern, dass ein nicht autorisierter Nutzer in dem Speicher 30 Zugriffsrechte manipuliert, um einen sonst nicht möglichen Zugriff zu ermöglichen. Die beschriebene Authentizitätsprüfung stellt also sicher, dass Zugriffe nur über Zugriffsrechte erfolgen können, die zuvor autorisiert worden sind bzw. authentisch sind. Unbefugte Änderungen der Zugriffsrechte sind nicht möglich.

Um sicherzustellen, dass der Speicher 30 ausschließlich mit Zugriffsrechten versehen wird, die von einem autorisierten Zugriffsrechte-Administrator freigegeben worden sind, ist die Steuereinrichtung 50 vorzugsweise darüber hinaus derart ausgestaltet, dass sie das Abspeichern eines weiteren neuen Zugriffsrechts in dem Speicher 30 nur dann zulässt, wenn dieses mit einer gültigen elektronischen Unterschrift versehen ist, die bestätigt, dass das Zugriffsrecht tatsächlich von einem autorisierten Zugriffsrechte-Administrator freigegeben worden ist. Auch für diese Prüfung wird vorzugsweise der Prüfschlüssel P herangezogen, der in der Steuereinrichtung 50 hinterlegt ist.

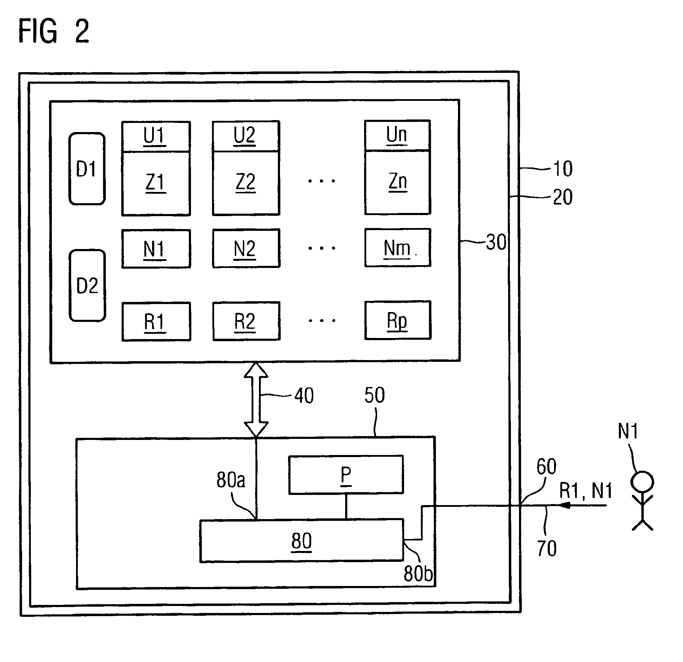

In der Figur 2 ist ein Ausführungsbeispiel für ein Feldgerät 10 gezeigt, bei dem in dem Speicher 30 zwei separate Datensätze D1 und D2 abgespeichert sind. Der Datensatz D1 wird nachfolgend als erster Datensatz und der Datensatz D2 als zweiter Datensatz bezeichnet.

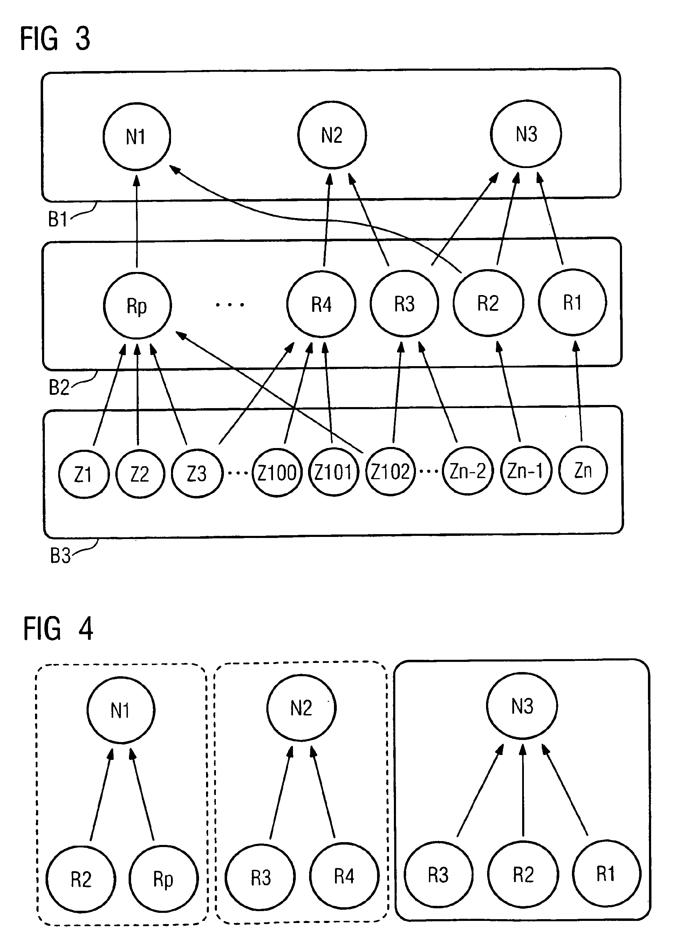

In dem ersten Datensatz D1 ist definiert, welche Rolle bzw. Rollen jeder der Nutzer wahrnehmen kann. In dem zweiten Datensatz D2 ist festgelegt, welche Zugriffsrechte Z1 bis Zn jede der Rollen R1 bis Rp ausüben darf. Die beiden Datensätze D1 und D2 können beispielsweise in Form einer Baumstruktur in dem Speicher 30 hinterlegt sein, wie dies beispielhaft in der Figur 3 dargestellt ist.

Bei der Baumstruktur gemäß der Figur 3 sind beispielsweise dem Nutzer N1 die Rollen R2 und Rp, dem Nutzer N2 die Rollen R3 und R4 und dem Nutzer N3 die Rollen R1, R2 und R3 zugeordnet. Den Rollen wiederum sind Zugriffsrechte Z1 bis Zn zugewiesen, die die jeweilige Rolle und damit die den Rollen zugeordneten Nutzer aktivieren können.

Bei der Baustruktur gemäß Figur 3 wird der erste Datensatz D1 gemäß Figur 2 also anschaulich durch die beiden oberen Blöcke B1 und B2 der Figur 3 gebildet und der zweite Datensatz D2 durch die in der Figur 3 beiden unteren Blöcke B2 und B3. Der mittlere Block gehört anschaulich also zu beiden Datensätzen D1 und D2.

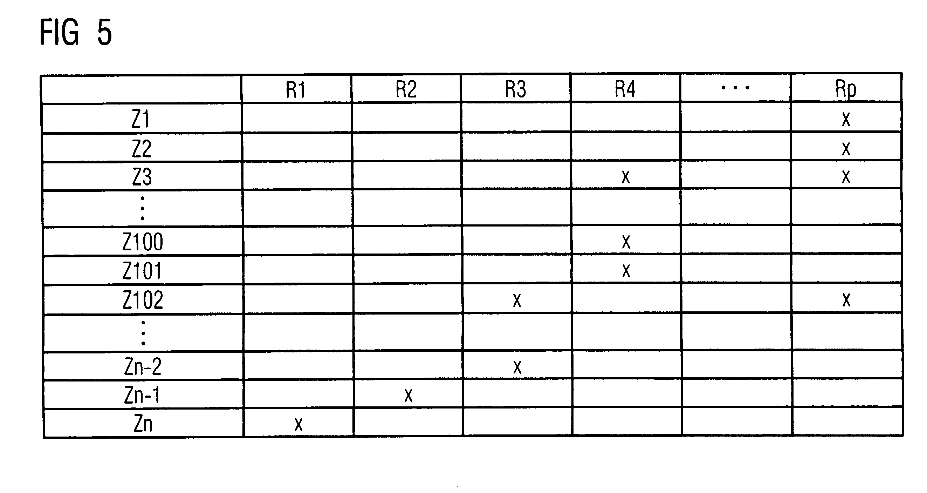

Anstelle der in der Figur 3 dargestellten Baumstruktur kann eine Definition der beiden Datensätze D1 und D2 auch in einer tabellarischen Form erfolgen. Auch ist es denkbar, einen der beiden Datensätze in Form einer Baumstruktur zu definieren und den anderen Datensatz mit Hilfe einer Tabelle. Eine solche Ausgestaltung ist beispielhaft in den Figuren 4 und 5 dargestellt.

In der Figur 4 ist erkennbar, dass der erste Datensatz D1, der jedem Nutzer jeweils zumindest eine Rolle zuordnet, in Form einer Baumstruktur abgelegt ist.

Die Zuordnung zwischen den Rollen R1 bis Rp und den Zugriffsrechten Z1 bis Zn erfolgt in einer Tabelle, wie sie beispielhaft in der Figur 5 dargestellt ist. In der Figur 5 wird durch den Buchstaben "X" festgelegt, dass eine Zuordnung zwischen Rolle und Zugriffsrecht besteht; fehlt ein solches "X", so besteht keine Zuordnung und die entsprechende Rolle kann das jeweilige Zugriffsrecht nicht ausüben.

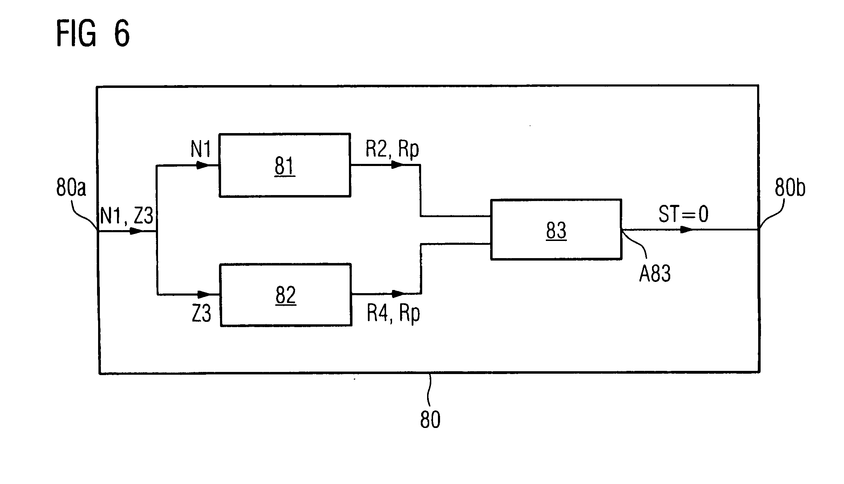

In der Figur 6 ist ein Ausführungsbeispiel für das Prüfmodul 80 der Steuereinrichtung 50 gemäß Figur 1 bzw. 2 gezeigt. Man erkennt, dass das Prüfmodul 80 ein erstes Hilfsmodul 81, ein zweites Hilfsmodul 82 sowie ein mit den beiden Hilfsmodulen 81 und 82 verbundenes Vergleichsmodul 83 aufweist. Die beiden Hilfsmodule 81 und 82 sind eingangsseitig mit dem Anschluss 80a des Prüfmoduls 80 verbunden, der mit der Busleitung 40 in Verbindung steht. Ein Ausgang A83 des Vergleichsmoduls 83 steht mit dem Anschluss 80b des Prüfmoduls 80 und damit mit dem Anschluss 60 des Feldgerätes 10 in Verbindung.

Die Funktion des ersten Hilfsmoduls 81 besteht darin, im Falle eines Zugriffs durch einen Nutzer, beispielsweise den Nutzer N1 gemäß Figur 1, aus dem ersten Datensatz D1 die Rolle bzw. die Rollen des jeweiligen Nutzers N1 auszulesen und diese an das Vergleichsmodul 83 zu übertragen. Im Falle eines Zugriffs des Nutzers N1 wird das erste Hilfsmodul 81 somit aus dem ersten Datensatz D1 die beiden Rollen R2 und Rp abfragen und diese an das Vergleichsmodul 83 übertragen.

Das zweite Hilfsmodul 82 wird bei dem beschriebenen Zugriff des Nutzers N1 aus dem Datensatz D2 alle diejenigen Rollen auslesen, die das für den jeweiligen Zugriff erforderliche Zugriffsrecht besitzen. Will der Nutzer N1 in seiner Rolle R1 beispielsweise das Zugriffsrecht Z3 aktivieren, so wird die Abfrage des Datensatzes D2 durch das zweite Hilfsmodul 82 somit die Rollen R4 und Rp als Ergebnis haben, die das zweite Hilfsmodul 82 an die Vergleichseinrichtung 83 übermittelt.

Die Vergleichseinrichtung 83 vergleicht nun, ob die von dem ersten Hilfsmodel 81 und die von dem zweiten Hilfsmodul 82 ausgelesenen Rollen eine Übereinstimmung aufweisen: Ist dies der Fall, so erzeugt das Vergleichsmodul 83 an seinem Ausgang A83 ein Steuersignal ST, mit dem eine Freigabe des angeforderten Zugriffsrechts erfolgt. Wird eine entsprechende Übereinstimmung nicht festgestellt, wie dies bei dem Ausführungsbeispiel der Fall ist, so erzeugt das Vergleichsmodul 83 ein Steuersignal ST, das einen entsprechenden Zugriff blockiert. Das Steuersignal ST kann beispielsweise binär codiert sein und eine logische 1 aufweisen, wenn ein Zugriff freigegeben wird, und eine logische 0 aufweisen, wenn ein Zugriff blockiert werden soll.

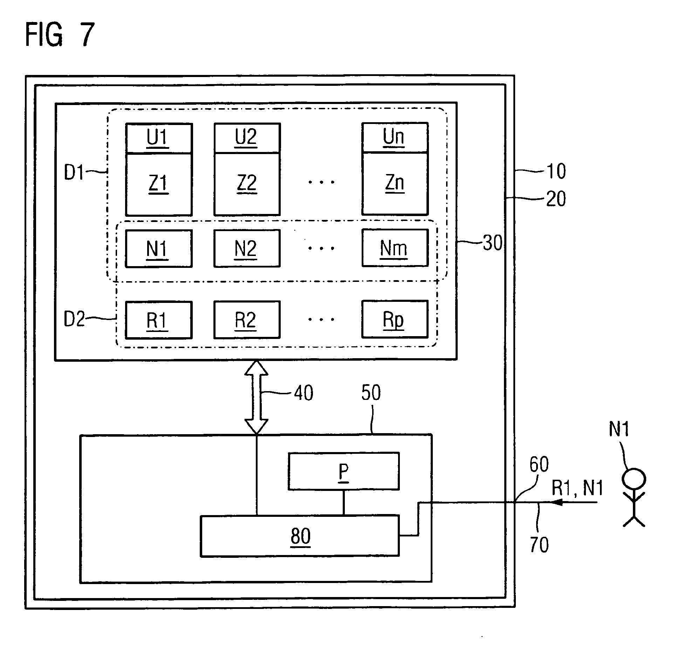

In der Figur 7 ist ein drittes Ausführungsbeispiel für ein Feldgerät gezeigt. Bei diesem Ausführungsbeispiel sind die beiden Datensätze D1 und D2 in dem Speicher 30 nicht separat und nicht zusätzlich zu den Zugriffsrechten Z1 bis Zn, den Nutzern N1 bis Nm und den Rollen R1 bis Rp abgespeichert, sondern mit diesen verknüpft. Konkret ist die Definition der Nutzer, Rollen und Zugriffsrechte in den Datensätzen D1 und D2 enthalten, wie dies schematisch in der Figur 7 dargestellt ist. Bezüglich der Funktionsweise entspricht das Feldgerät gemäß Figur 7 den beiden Ausführungsbeispielen gemäß den Figuren 1 und 2.

Die oben beschriebenen Zugriffsrechte Z1-Zn können beispielsweise in nicht weiter gezeigten Zugriffsmodulen, die einen Zugriff auf mindestens einen Gerätewert, einen Gerätsparameter oder eine Gerätefunktion des Feldgeräts 10 tatsächlich durchführen, auch implementiert sein; in diesem Falle würde das Prüfmodul 80 einen Zugriff durch einen Nutzer ausschließlich dann zulassen, wenn das für den Zugriff erforderliche Zugriffsmodul mit dem darin implementierten Zugriffsrecht mit einer gültigen elektronischen Unterschrift U versehen ist.

Die oben beschriebenen Zugriffsrechte können beispielsweise auch durch Zugriffsmodule, die einen Zugriff auf mindestens einen Gerätewert, einen Gerätsparameter oder eine Gerätefunktion des Feldgeräts 10 tatsächlich durchführen, selbst gebildet sein; in diesem Falle würde das Prüfmodul 80 einen Zugriff durch einen Nutzer ausschließlich dann zulassen, wenn das für den Zugriff erforderliche Zugriffsmodul selbst mit einer gültigen elektronischen Unterschrift versehen ist.

## Patentansprüche

1. Feldgerät (10), insbesondere Schutzgerät, zum Schützen, Steuern oder Überwachen einer elektrischen Schalt- oder Energieversorgungsanlage mit einer Zugriffskontrolleinrichtung (20), die einen Zugriff auf das Feldgerät kontrolliert, wobei die Zugriffskontrolleinrichtung umfasst:
- einen Speicher (30) mit darin abgespeicherten Zugriffsrechten (Z1-Zn), Rollen (R1-Rp) und Nutzern (N1-Nm), wobei jedes Zugriffsrecht jeweils den Zugriff auf mindestens einen Gerätewert, einen Geräteparameter oder eine Gerätefunktion definiert, jeder Rolle jeweils ein oder mehrere Zugriffsrechte zugeordnet sind, und jedem Nutzer jeweils ein oder mehrere Rollen zugeordnet sind, und
- eine Steuereinrichtung (50), die geeignet ist, einen Zugriff auf einen Gerätewert, einen Geräteparameter oder eine Gerätefunktion durch einen Nutzer zu unterbinden, wenn dem jeweiligen Nutzer keine Rolle mit dem für den jeweiligen Zugriff erforderlichen Zugriffsrecht zugeordnet ist,
**dadurch gekennzeichnet**,
die Steuereinrichtung ein Prüfmodul (80) aufweist, das einen Zugriff durch einen Nutzer (N1) ausschließlich dann zulässt, wenn das für den jeweiligen Zugriff erforderliche und in dem Speicher abgespeicherte Zugriffsrecht mit einer gültigen elektronischen Unterschrift (U1-Un) versehen ist.

2. Feldgerät nach Anspruch 1,
**dadurch gekennzeichnet, dass**
in dem Feldgerät zumindest ein Prüfschlüssel (P) in nicht überschreibbarer Form fest abgespeichert ist, mit dem sich die Gültigkeit der elektronischen Unterschrift feststellen lässt.

3. Feldgerät nach Anspruch 1 oder 2,
**dadurch gekennzeichnet, dass**
der Speicher von außen, insbesondere über eine Datenleitung (70), mittelbar oder unmittelbar ansprechbar ist und dass von außen weitere Zugriffsrechte abspeicherbar sind.

4. Feldgerät nach Anspruch 3,
**dadurch gekennzeichnet, dass**
die Steuereinrichtung ein weiteres Zugriffsrecht in dem Speicher nur abspeichert, wenn dieses eine elektronische Unterschrift aufweist und eine Prüfung der elektronischen Unterschrift bestätigt, dass dieses von einem zur Freigabe von Zugriffsrechten autorisierten Zugriffsrechte-Administrator stammt.

5. Feldgerät nach einem der voranstehenden Ansprüche,
**dadurch gekennzeichnet, dass**
in dem Speicher die Zugriffsrechte, Rollen und Nutzer
- in einem ersten Datensatz (D1), der jedem Nutzer jeweils zumindest eine Rolle zuordnet, und
- in einem zweiten Datensatz (D2), der jedem Zugriffsrecht
jeweils zumindest eine Rolle zuordnet,
abgespeichert sind.

6. Feldgerät nach Anspruch 5,
**dadurch gekennzeichnet, dass**
- das Prüfmodul zumindest ein erstes Hilfsmodul (81), ein zweites Hilfsmodul (82) und ein mit dem ersten Hilfsmodul und dem zweiten Hilfsmodul verbundenes Vergleichsmodul (83) aufweist,
- wobei das erste Hilfsmodul geeignet ist, im Falle eines Zugriffs durch einen Nutzer aus dem ersten Datensatz die Rolle bzw. die Rollen des jeweiligen Nutzers auszulesen und diese an das Vergleichsmodul zu übertragen,
- wobei das zweite Hilfsmodul geeignet ist, aus dem zweiten Datensatz diejenigen Rollen auszulesen, die das für den jeweiligen Zugriff erforderliche Zugriffsrecht besitzen, und die ausgelesenen Rollen an das Vergleichsmodul zu übertragen, und
- wobei das Vergleichsmodul geeignet ist, die von dem ersten Hilfsmodul ausgelesenen Rollen mit denen des zweiten Hilfsmoduls zu vergleichen und einen Zugriff des Nutzers zu blockieren, falls keine der aus dem ersten Hilfsmodul ausgelesenen Rollen mit einer der aus dem zweiten Hilfsmodul ausgelesenen Rollen übereinstimmt.

7. Verfahren zum Betreiben eines Feldgeräts (10), insbesondere Schutzgeräts, zum Schützen, Steuern oder Überwachen einer elektrischen Schalt- oder Energieversorgungsanlage wobei
- ein Zugriff auf das Feldgerät mittels in einem Speicher (30) abgespeicherter Zugriffsrechte (Z1-Zn), Rollen (R1-Rp) und Nutzern (N1-Nm) kontrolliert wird, wobei jedes Zugriffsrecht jeweils den Zugriff auf mindestens einen Gerätewert, einen Geräteparameter oder eine Gerätefunktion definiert, jeder Rolle jeweils ein oder mehrere Zugriffsrechte zugeordnet sind, und jedem Nutzer jeweils ein oder mehrere Rollen zugeordnet sind, und
- ein Zugriff auf einen Gerätewert, einen Geräteparameter oder eine Gerätefunktion durch einen Nutzer unterbunden wird, wenn dem jeweiligen Nutzer keine Rolle mit dem für den jeweiligen Zugriff erforderlichen Zugriffsrecht zugeordnet ist,
**dadurch gekennzeichnet, dass**
ein Zugriff durch einen Nutzer ausschließlich dann zugelassen wird, wenn das für den jeweiligen Zugriff erforderliche und in dem Speicher abgespeicherte Zugriffsrecht mit einer gültigen elektronischen Unterschrift (U1-Un) versehen ist.

8. Verfahren nach Anspruch 7,
**dadurch gekennzeichnet, dass**
mit zumindest einem Prüfschlüssel (P), der in nicht überschreibbarer Form in dem Feldgerät fest abgespeichert ist, die Gültigkeit der elektronischen Unterschrift festgestellt wird.

9. Verfahren nach Anspruch 7 oder 8,
**dadurch gekennzeichnet, dass**
in dem Speicher von außen, insbesondere über eine Datenleitung (70), mindestens ein weiteres Zugriffsrecht abgespeichert wird.

10. Verfahren nach Anspruch 9,
**dadurch gekennzeichnet, dass**
ein weiteres Zugriffsrecht in dem Speicher nur abgespeichert wird, wenn dieses eine elektronische Unterschrift aufweist und eine Prüfung der elektronischen Unterschrift bestätigt, dass dieses von einem zur Freigabe von Zugriffsrechten autorisierten Zugriffsrechte-Administrator stammt.

11. Verfahren nach Anspruch 10,
**dadurch gekennzeichnet, dass**
die Gültigkeit einer elektronischen Unterschrift eines weiteren Zugriffsrechts vor dessen Abspeicherung mit einem oder mehreren in dem Feldgerät fest abgespeicherten und nicht überschreibbaren Prüfschlüsseln überprüft wird.

12. Verfahren nach einem der voranstehenden Ansprüche 7-11,
**dadurch gekennzeichnet, dass**
in dem Speicher die Zugriffsrechte, Rollen und Nutzer
- in einem ersten Datensatz, der jedem Nutzer jeweils zumindest eine Rolle zuordnet, und
- in einem zweiten Datensatz, der jedem Zugriffsrecht jeweils zumindest eine Rolle zuordnet,
abgespeichert werden.

13. Verfahren nach Anspruch 12,
**dadurch gekennzeichnet, dass**
- im Falle eines Zugriffs durch einen Nutzer aus dem ersten Datensatz die Rolle bzw. die Rollen des jeweiligen Nutzers ausgelesen werden,
- aus dem zweiten Datensatz diejenigen Rollen ausgelesen werden, die das für den jeweiligen Zugriff erforderliche Zugriffsrecht besitzen, und
- die aus dem ersten Datensatz ausgelesenen Rollen mit den aus dem zweiten Datensatz ausgelesenen Rollen verglichen werden und ein Zugriff des Nutzers blockiert wird, falls keine der aus dem ersten Hilfsmodul ausgelesenen Rollen mit einer der aus dem zweiten Hilfsmodul ausgelesenen Rollen übereinstimmt.

## Claims

1. Field device (10), particularly a protective device, for protecting, controlling or monitoring an electrical switchgear or power supply unit with an access control device (20) which controls access to the field device, wherein the access control device comprises:
- a memory (30) with access rights (Z1-Zn), roles (R1-Rp) and users (N1-Nm) stored therein, wherein each access right respectively defines the access to at least one device value, a device parameter or a device function, each role respectively has one or more associated access rights, and each user respectively has one or more associated roles, and
- a control device (50) which is suitable for preventing access to a device value, a device parameter or a device function by a user if the respective user has no associated role with the access right required for the respective access,
**characterized in that**
the control device has a checking module (80) which permits access by a user (N1) exclusively if the access right which is required for the respective access and which is stored in the memory is provided with a valid electronic signature (U1-Un).

2. Field device according to Claim 1,
**characterized in that**
the field device permanently stores at least one checking key (P) in non-overwritable form which allows the validity of the electronic signature to be established.

3. Field device according to Claim 1 or 2,
**characterized in that**
the memory is indirectly or directly addressable from the outside, particularly via a data line (70), and **in that** further access rights can be stored from the outside.

4. Field device according to Claim 3,
**characterized in that**
the control device stores a further access right in the memory only if it has an electronic signature and a check on the electronic signature confirms that said access right originates from an access rights administrator which is authorized to release access rights.

5. Field device according to one of the preceding claims, **characterized in that**
the memory stores the access rights, roles and users
- in a first data record (D1), which assigns each user at least one respective role, and
- in a second data record (D2), which assigns each access right at least one respective role.

6. Field device according to Claim 5,
**characterized in that**
- the checking module has at least one first auxiliary module (81), a second auxiliary module (82) and a comparison module (83) which is connected to the first auxiliary module and to the second auxiliary module,
- wherein the first auxiliary module is suitable for reading, in the event of access by a user, the role or roles of the respective user from the first data record and for transmitting said role(s) to the comparison module,
- wherein the second auxiliary module is suitable for reading from the second data record those roles which have the access right which is required for the respective access and for transmitting the roles which have been read to the comparison module, and
- wherein the comparison module is suitable for comparing the roles which have been read by the first auxiliary module with those of the second auxiliary module and for blocking access by the user if none of the roles read from the first auxiliary module matches one of the roles read from the second auxiliary module.

7. Method for operating a field device (10), particularly a protective device, for protecting, controlling or monitoring an electrical switchgear or power supply unit, wherein
- access to the field device is controlled by means of access rights (Z1-Zn), roles (R1-Rp) and users (N1-Nm) stored in a memory (30), wherein each access right respectively defines the access to at least one device value, a device parameter or a device function, each role respectively has one or more associated access rights, and each user respectively has one or more associated roles, and
- access to a device value, a device parameter or a device function by a user is prevented if the respective user has no associated role with the access right which is required for the respective access,
**characterized in that**
access by a user is permitted exclusively if the access right which is required for the respective access and which is stored in the memory is provided with a valid electronic signature (U1-Un).

8. Method according to Claim 7,
**characterized in that**
at least one checking key (P) which is permanently stored in the field device in non-overwritable form is used to establish the validity of the electronic signature.

9. Method according to Claim 7 or 8,
**characterized in that**
the memory is used to store at least one further access right from the outside, particularly via a data line (70).

10. Method according to Claim 9,
**characterized in that**
a further access right is stored in the memory only if it has an electronic signature and a check on the electronic signature confirms that said access right originates from an access rights administrator which is authorized to release access rights.

11. Method according to Claim 10,
**characterized in that**
the validity of an electronic signature from a further access right is checked prior to the storage thereof using one or more checking keys which are permanently stored in the field device and which are not overwritable.

12. Method according to one of the preceding Claims 7-11,
**characterized in that**
the memory is used to store the access rights, roles and users
- in a first data record, which assigns each user at least one respective role, and
- in a second data record, which assigns each access right at least one respective role.

13. Method according to Claim 12,
**characterized in that**
- in the event of access by a user the role or the roles of the respective user is/are read from the first data record,
- those roles which have the access right which is required for the respective access are read from the second data record, and
- the roles which have been read from the first data record are compared with the roles which have been read from the second data record, and access by the user is blocked if none of the roles which have been read from the first auxiliary module matches one of the roles which have been read from the second auxiliary module.

## Revendications

1. Appareil ( 10 ) de terrain, notamment appareil de protection, pour la protection, la commande ou la surveillance d'une installation électrique de commutation ou d'alimentation, comprenant un dispositif ( 20 ) de contrôle d'accès, qui contrôle un accès à l'appareil de terrain, le dispositif de contrôle d'accès comprenant :
- une mémoire ( 30 ), dans laquelle sont mémorisés des droits ( Z1 à Zn ) d'accès, des rôles ( R1 à Rp ) et des utilisateurs ( N1 à Nm ), chaque droit d'accès définissant respectivement l'accès à au moins une valeur d'appareil, à un paramètre d'appareil ou à une fonction d'appareil, un ou plusieurs droits d'accès étant affectés à chaque rôle et un ou plusieurs rôles étant affectés à chaque utilisateur, et
- un dispositif ( 50 ) de commande, qui est propre à interdire un accès par un utilisateur à une valeur d'appareil, à un paramètre d'appareil, lorsqu'un rôle avec le droit d'accès nécessaire à cet accès n'est pas affecté à cet utilisateur,
**caractérisé**
**en ce que** le dispositif de commande a un module ( 80 ) de contrôle, qui autorise un accès par un utilisateur ( N1 ), exclusivement lorsque le droit d'accès nécessaire pour cet accès est mémorisé dans les mémoires et muni d'une signature ( U1 à Un ) électronique valable.

2. Appareil de terrain suivant la revendication 1,
**caractérisé en ce que**
dans l'appareil de terrain, est mémorisée, de manière fixe, sous une forme ne pouvant pas être écrasée, au moins une clé ( P ) de contrôle, par laquelle la validité de la signature électronique peut être constatée.

3. Appareil de terrain suivant la revendication 1 ou 2,
**caractérisé en ce que**
la mémoire est adressable de l'extérieur indirectement ou directement, notamment par une ligne ( 70 ) de données et **en ce que** d'autres droits d'accès peuvent être mémorisés de l'extérieur.

4. Appareil de terrain suivant la revendication 3,
**caractérisé en ce que**
le dispositif de commande ne mémorise un autre droit d'accès dans la mémoire que si celui-ci a une signature électronique et si un contrôle de la signature électronique confirme que celui-ci provient d'un administrateur de droits d'accès autorisé à délivrer des droits d'accès.

5. Appareil de terrain suivant l'une des revendications précédentes,
**caractérisé en ce que**
dans la mémoire les droits d'accès, les rôles et les utilisateurs sont mémorisés
- dans un premier jeu ( D1 ) de données, qui affecte respectivement au moins un rôle à chaque utilisateur, et
- dans un deuxième jeu ( D2 ) de données, qui affecte respectivement au moins un rôle à chaque droit d'accès.

6. Appareil de terrain suivant la revendication 5,
**caractérisé en ce que**
- le module de contrôle a au moins un premier module ( 81 ) auxiliaire, un deuxième module ( 82 ) auxiliaire et un module ( 83 ) de comparaison relié au premier module auxiliaire et au deuxième module auxiliaire,
- dans lequel le premier module auxiliaire est propre à choisir, dans le cas d'un accès par un utilisateur dans le premier jeu de données, le rôle ou les rôles de l'utilisateur respectif et à les transmettre au module de comparaison,
- dans lequel le deuxième module auxiliaire est propre à choisir dans le deuxième jeu de données les rôles, qui ont le droit d'accès nécessaire à cet accès et à transmettre les rôles choisis au module de comparaison, et
- dans lequel le module de comparaison est propre à comparer les rôles choisis par le premier module auxiliaire à ceux du deuxième module auxiliaire et à bloquer un accès de l'utilisateur, si aucun des rôles choisis dans le premier module auxiliaire ne coïncide avec l'un des rôles choisis dans le deuxième module auxiliaire.

7. Procédé pour faire fonctionner un appareil ( 10 ) de terrain, notamment un appareil de protection, pour la protection, la commande ou la surveillance d'un système électrique de commutation ou d'alimentation, dans lequel
- on contrôle un accès à l'appareil de terrain au moyen de droits ( Z1 à Zn ) d'accès, de rôles ( R1 à Rp ) et d'utilisateurs ( N1 à Nm ) mémorisés dans une mémoire, chaque droit d'accès définissant respectivement l'accès à au moins une valeur d'appareil, un paramètre d'appareil ou une fonction d'appareil, respectivement un ou plusieurs droits d'accès étant affectés à chaque rôle et respectivement un ou plusieurs rôles étant affectés à chaque utilisateur, et
- on interdit à un utilisateur d'accéder à une valeur d'appareil à un paramètre d'appareil ou à une fonction d'appareil, si un rôle ayant le droit d'accès nécessaire à cet accès n'est pas affecté à cet utilisateur,
**caractérisé en ce que**
on autorise un accès par un utilisateur exclusivement, lorsque le droit d'accès nécessaire pour cet accès est mémorisé dans la mémoire et muni d'une signature ( U1 à Un ) électronique valable.

8. Procédé suivant la revendication 7,
**caractérisé en ce que**
on constate la validité de la signature électronique par au moins une clé ( P ) de contrôle, qui est mémorisée de manière fixe dans l'appareil de terrain sous une forme qui ne peut pas être écrasée.

9. Procédé suivant la revendication 7 ou 8,
**caractérisé en ce que**
on mémorise au moins un autre droit d'accès dans la mémoire de l'extérieur, notamment par une ligne ( 70 ) de données.

10. Procédé suivant la revendication 9,
**caractérisé en ce que**
on ne mémorise un autre droit d'accès dans la mémoire que si celui-ci a une signature électronique et si un contrôle de la signature électronique confirme que celle-ci provient d'un administrateur de droits d'accès autorisé à donner des droits d'accès.

11. Procédé suivant la revendication 10,
**caractérisé en ce que**
on contrôle la validité d'une signature électronique d'un autre droit d'accès avant sa mémorisation par une ou par plusieurs clés de contrôle mémorisée de manière fixe dans l'appareil de terrain et qui ne peut pas être écrasée.

12. Procédé suivant l'une des revendications précédentes 7 à 11,
**caractérisé en ce que**
on mémorise dans la mémoire les droits d'accès, les rôles et les utilisateurs
- dans un premier jeu ( D1 ) de données, qui affecte respectivement au moins un rôle à chaque utilisateur, et
- dans un deuxième jeu ( D2 ) de données, qui affecte respectivement au moins un rôle à chaque droit d'accès.

13. Procédé suivant la revendication 12,
**caractérisé en ce que**
- dans le cas d'un accès par un utilisateur, le rôle ou les rôles de l'utilisateur respectif sont choisis dans le premier jeu de données,
- les rôles, qui ont le droit d'accès nécessaire à cet accès, sont choisis dans le deuxième jeu de données, et
- les rôles choisis dans le premier jeu de données sont comparés aux rôles choisis dans le deuxième jeu de données et un accès de l'utilisateur est bloqué, si aucun des rôles choisis dans le premier module auxiliaire ne coïncide avec l'un des rôles choisis dans le deuxième module auxiliaire.
